# FASCICULE DE BREVET EUROPEEN

(11) **EP 4 096 986 B1**
(45) Date de publication et mention de la délivrance du brevet: **08.01.2025**
(21) Numéro de dépôt: 21706347.8
(22) Date de dépôt: 21.01.2021
(51) Int. Cl.: B62B 3/02, B62B 5/08, B62B 7/12

(54) **CHARIOT MULTIFONCTIONNEL A DOSSIER PIVOTANT**
MULTIFUNKTIONALER HANDWAGEN MIT SCHWENKBARER RÜCKENLEHNE
MULTIFUNCTIONAL CARRIAGE WITH PIVOTING BACKREST

(30) Priorité: 29.01.2020 FR 2000897
(43) Date de publication de la demande: 07.12.2022
(73) Titulaire: 1Pax, 75019 Paris (FR)
(72) Inventeur: MIRANDA, Mabel, 75018 Paris (FR); GUIBOURT, Alexandre, 92600 Asnières sur Seine (FR)
(74) Mandataire: IPAZ
(86) Numéro de dépôt international: PCT/FR2021/050113
(87) Numéro de publication internationale: WO 2021/152242

(56) Documents cités:
- WO-A1-2019/014731
- DE-A1- 3 402 944
- FR-A1- 2 614 769
- US-A- 5 213 360

## Description

### DOMAINE DE L'INVENTION

La présente invention concerne un chariot multifonctionnel capable de passer d'une configuration panier (permettant de transporter des objets ou articles) à une configuration siège (permettant à une personne de s'asseoir) et inversement.

### ARRIERE-PLAN TECHNIQUE

De nombreux types de chariots existent pour transporter des objets et/ou des produits.

Par exemple, le chariot de type « caddie » largement utilisé dans les magasins de grande surface est configuré pour le transport des marchandises. Certains modèles comportent en même temps un siège pliant de petite taille pouvant être utilisé uniquement par des enfants. Ce type de chariot ne permet donc pas à un adulte, notamment à une personne âgée ou à une personne ayant des difficultés à marcher, de l'utiliser en tant que siège.

Dans les aérogares, des gares de train ou autres, un autre type de chariot existe, qui facilite le transport de bagages. Cependant, ce type de chariot ne permet pas son utilisation en tant que siège. Ainsi, lors des périodes de grande affluence de voyageurs, et dû au nombre fixe et limité des sièges existants, un grand nombre de voyageurs se trouvent dans l'incapacité de s'asseoir, problème qui s'aggrave lors des retards possibles de vols ou de trains.

On connaît par ailleurs des déambulateurs utilisés par des personnes ayant des difficultés à marcher, qui offrent sur leur partie avant un siège permettant à la personne qui l'utilise de s'asseoir.

Le document FR 2614769 décrit un panier à provisions transformable susceptible d'être fixé sur un chariot pliant.

Le document WO 2019/014731 décrit un chariot de supermarché transformable en moyen de transport pour des animaux ou des personnes.

Le document US 5213360 décrit un chariot comportant un siège.

Le document DE 3402944 décrit un système d'étagères pivotantes.

Il existe donc un réel besoin de fournir un chariot multifonctionnel utilisable dans des espaces commerciaux, notamment des aérogares, capable d'améliorer la qualité de service et de faciliter la vie des usagers.

### RESUME DE L'INVENTION

L'invention répond au besoin identifié ci-dessus. Elle concerne un chariot tel que définie par la revendication 1.

Dans des modes de réalisation, la structure de cadre comprend deux montants, le logement étant disposé entre les deux montants et fixé à ceux-ci, et l'assise et la partie fixe du dossier sont maintenus sans mouvement possible vis-à-vis de la structure de cadre.

Dans des modes de réalisation, le logement est entièrement formé par une ou plusieurs parois solides.

Dans des modes de réalisation, en configuration siège, la partie mobile du dossier est située à l'arrière du logement et au-dessus de la partie fixe du dossier et, en configuration panier, la partie mobile du dossier est située à l'avant du logement, en face de la partie fixe du dossier et immédiatement au-dessus de l'assise.

Dans des modes de réalisation, l'axe de pivotement de la partie mobile du dossier est situé à l'extrémité haute et avant de la partie fixe du dossier.

Dans des modes de réalisation, la structure de cadre comprend deux montants, le logement étant disposé entre les deux montants, le pivotement de la partie mobile du dossier est réalisé au moyen de deux tiges alignées solidaires de la partie mobile du dossier et situées de part et d'autre de celle-ci ; et chacune des tiges en vis-à-vis s'insère dans un trou présent dans un montant de la structure du cadre ; la partie mobile du dossier étant configurée pour pivoter sur l'axe de pivotement aligné avec les tiges.

Dans des modes de réalisation, la structure de cadre comprend deux montants, le logement étant disposé entre les deux montants, le pivotement de la partie mobile du dossier est réalisé au moyen de deux tiges alignées solidaires du cadre et situées de part et d'autre de la partie mobile du dossier ; et chacune des tiges en vis-à-vis s'insère dans un trou présent dans la partie mobile du dossier ; la partie mobile du dossier étant configurée pour pivoter sur un l'axe de pivotement aligné avec les tiges.

Dans des modes de réalisation, la structure de cadre comprend deux montants, le logement étant disposé entre les deux montants, le pivotement de la partie mobile du dossier est réalisé au moyen de deux charnières alignées situées de part et d'autre de la partie mobile du dossier, ces charnières étant solidaires à la fois de la partie mobile du dossier et des montants ou de la partie fixe du dossier ; la partie mobile du dossier étant configurée pour pivoter sur l'axe de pivotement aligné avec les charnières.

Dans des modes de réalisation, la partie fixe du dossier et l'assise sont en continuité, sans espace intermédiaire.

Dans des modes de réalisation, une fente est prévue entre la partie fixe du dossier et l'assise.

Dans des modes de réalisation, le chariot est susceptible de s'emboîter avec un même chariot selon une direction avant-arrière, les chariots étant de préférence en configuration siège.

### BREVE DESCRIPTION DES FIGURES

La **figure 1** représente de manière schématique une vue en perspective du chariot multifonctionnel selon un premier mode de réalisation, le chariot étant dans la configuration panier.
La **figure 2** représente de manière schématique une vue de côté du chariot multifonctionnel selon le premier mode de réalisation, le chariot étant dans la configuration panier.
La **figure 3** représente de manière schématique une vue en perspective du chariot multifonctionnel selon le premier mode de réalisation, le chariot étant dans une configuration transitoire.
La **figure 4** représente de manière schématique une vue de côté du chariot multifonctionnel selon le premier mode de réalisation, le chariot étant dans une configuration transitoire.
La **figure 5** représente de manière schématique une vue en perspective du chariot multifonctionnel selon le premier mode de réalisation, le chariot étant dans la configuration siège.
La **figure 6** représente de manière schématique une vue de côté du chariot multifonctionnel selon le premier mode de réalisation, le chariot ayant dans la configuration siège.
La **figure 7** représente de manière schématique une vue en perspective du chariot multifonctionnel selon un deuxième mode de réalisation, le chariot étant dans la configuration panier.
La **figure 8** représente de manière schématique une vue de côté du chariot multifonctionnel selon le deuxième mode de réalisation, le chariot étant dans la configuration panier.
La **figure 9** représente de manière schématique une vue en perspective du chariot multifonctionnel selon le deuxième mode de réalisation, le chariot étant dans une configuration transitoire.
La **figure 10** représente de manière schématique une vue de côté du chariot multifonctionnel selon le deuxième mode de réalisation, le chariot étant dans une configuration transitoire.
La **figure 11** représente de manière schématique une vue en perspective du chariot multifonctionnel selon le deuxième mode de réalisation, le chariot étant dans la configuration siège.
La **figure 12** représente de manière schématique une vue de côté du chariot multifonctionnel selon le deuxième mode de réalisation, le chariot étant dans la configuration siège.

### DESCRIPTION DE MODES DE REALISATION DE L'INVENTION

L'invention est maintenant décrite plus en détail et de façon non limitative dans la description qui suit.

L'invention concerne en premier lieu un chariot présentant une direction avant-arrière, le chariot comprenant :
- une structure de cadre 3, 6, 7 ;
- une pluralité de roues 4, 8 ;
- une poignée 5 disposée à une extrémité arrière du chariot et configurée pour déplacer manuellement le chariot 1 ;
- un logement 2.

De préférence, le logement 2 selon l'invention n'est pas amovible par rapport à la structure de cadre du chariot. Dans la configuration panier, le logement 2 est configuré pour le transport d'objets ou d'articles disposés dans celui-ci, l'utilisateur pouvant pousser ou tirer le chariot pour le déplacer manuellement en le faisant rouler sur le sol. Dans la configuration siège, le logement 2 est configuré pour permettre à un utilisateur, de préférence un utilisateur adulte, de s'asseoir dans le logement. D'ailleurs, le chariot selon l'invention peut également servir comme poussette pour transporter des enfants ou comme fauteuil roulant pour transporter des personnes à mobilité réduite.

Avantageusement, selon certains modes de réalisation, ce chariot est capable d'être emboité horizontalement (selon la direction avant-arrière) et rangé avec un ou plusieurs chariots identiques, avec un gain de place similaire aux caddies ou chariots classiques existants.

Le logement 2 comporte soit une unique paroi courbe, soit une pluralité de parois, définissant un espace creux. Le logement comporte une ouverture donnant accès à l'espace creux. L'orientation et la forme de l'ouverture peuvent être modifiées selon la configuration du chariot. Le logement peut passer d'une configuration panier à une configuration siège et inversement en restant solidaire de la structure de cadre. Dans la configuration panier, l'ouverture peut être essentiellement orientée vers le haut. Dans la configuration siège, l'ouverture peut être orientée à la fois vers le haut et vers l'avant (ou vers l'arrière).

De préférence, la ou les parois constituant le logement sont des parois solides, par exemple en bois, en matériau plastique, en matériau métallique, en matériau composite, ou une combinaison de ceux-ci. Les parois sont de préférence pleines, mais peuvent alternativement être percées d'orifices, ou se présenter sous la forme de grilles.

La ou les parois solides peuvent optionnellement être revêtues d'un rembourrage, d'un matériau textile ou autre.

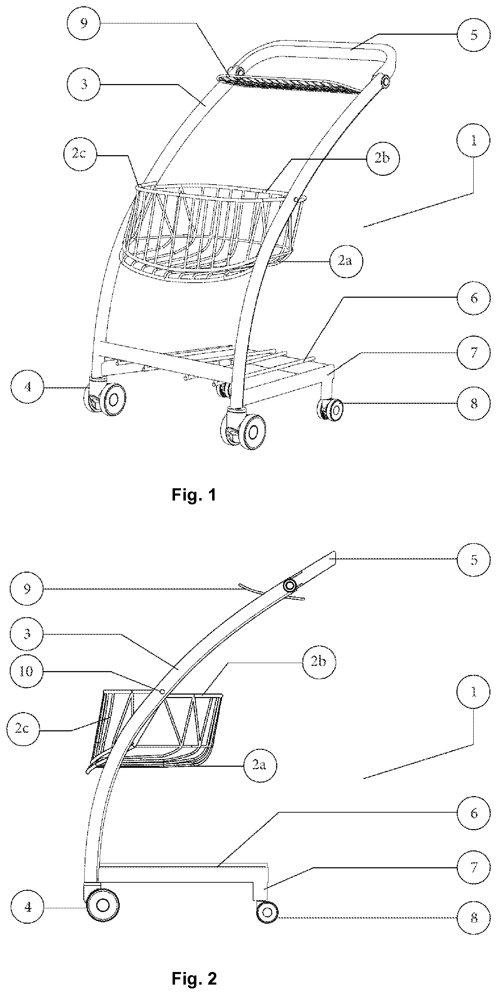

En faisant référence dans un premier temps au premier mode de réalisation illustré aux **figures 1**à **6**, le chariot 1 peut comprendre un logement 2 fixé à une structure de cadre. Le chariot 1 comprend également une pluralité de roues 4, 8 (par exemple au nombre de quatre, comme illustré) fixées à une partie inférieure de la structure de cadre et destinées à être en contact avec le sol. Les roues 4, 8 sont de préférence des roues orbitales susceptibles de pivoter verticalement à 360°. Le chariot comprend également au moins une poignée 5 fixée (ou intégrée) à la structure de cadre et destinée à être manipulée, et permettant le déplacement manuel du chariot 1, c'est-à-dire permettant à un utilisateur de pousser ou de tirer le chariot 1 en le faisant rouler sur le sol. On définit une direction avant-arrière dans le plan horizontal, la poignée 5 étant fixée ou disposée à l'arrière du chariot 1. Une direction latérale ou droite-gauche est définie dans le plan horizontal, orthogonalement la direction avant-arrière.

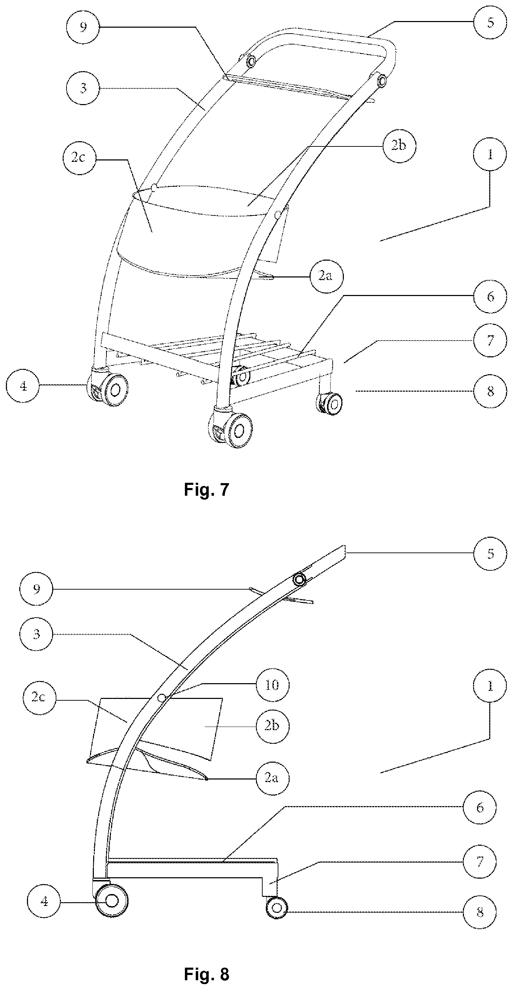

La structure de cadre comporte deux montants 3. Le logement 2 est disposé entre les deux montants 3 et fixé à ceux-ci. Le logement 2 comprend une assise 2a et un dossier. Le dossier comprend une partie fixe 2b et une partie mobile 2c. L'assise 2a et la partie fixe du dossier 2b sont maintenus sans mouvement possible vis-à-vis de la structure de cadre. L'assise 2a et la partie fixe 2b du dossier peuvent être dans une continuité et sans espace intermédiaire (comme illustré dans les **figures 1**à **6**) ou au contraire être séparées par un espace intermédiaire (comme illustré dans les **figures 7**à **12**).

Les montants 3 ont une orientation au moins partiellement verticale. De préférence ils ont une orientation partiellement verticale et partiellement vers l'arrière (du bas vers le haut). Ils peuvent être essentiellement rectilignes. Alternativement et de préférence, comme illustré, ils peuvent présenter deux ou plus de deux portions rectilignes successives, ou une forme courbe. Les montants 3 peuvent notamment présenter une courbure telle que l'angle entre les montants 3 et la direction verticale est croissant du bas vers le haut, comme illustré.

Dans certaines variantes, la poignée 5 peut être disposée sous la forme d'une barre transversale entre les montants 3, de préférence à une extrémité supérieure et arrière de ceux-ci. Alternativement, plusieurs poignées 5 peuvent être prévues, par exemple une poignée par montant 3.

Une partie des roues 4 peuvent être disposées aux extrémités inférieures (pieds) des montants 3. Dans l'exemple illustré, chaque montant 3 comporte une roue avant 4 respective.

La structure de cadre peut également comprendre des montants supplémentaires et/ou des pieds supplémentaires pour supporter des roues 8, et/ou une ou des barres transversales et/ou un ou plusieurs plateaux.

Dans l'exemple illustré, la structure de cadre comporte un plateau inférieur 6. Celui-ci peut être fixé entre les montants 3, sous le logement 2, et s'étendre de préférence vers l'arrière du chariot 1 à partir des montants 3. Il peut être incliné vers le bas, de préférence dans la direction arrière, et supporter des roues arrière 8. Alternativement, le plateau inférieur 6 peut être essentiellement horizontal et être solidaire de pieds ou montants additionnels 7 à son extrémité arrière. Le plateau inférieur 6 peut être configuré pour recevoir et transporter des objets tels que des bagages. Le plateau inférieur 6 peut être comprendre ou être constitué par des fils métalliques, comme illustré, ou encore une paroi pleine, ou encore une paroi percée d'orifices, ou encore une grille.

Le logement 2 comporte :
- une assise 2a : une surface dont l'inclinaison par rapport à l'horizontale est inférieure à 10 degrés (par exemple essentiellement nulle, c'est-à-dire qu'elle est orientée essentiellement horizontalement) et située en dessous du dossier ;
- un dossier : une ou des surfaces dont l'inclinaison par rapport à l'horizontale est supérieure à 10 degrés et situées au-dessus de l'assise.

Les surfaces en question peuvent être essentiellement planes ou présenter une courbure.

Le dossier du logement est constitué de :
- une partie fixe du dossier 2b située à l'arrière de l'assise 2a ;
- une partie mobile du dossier 2c.

La partie mobile du dossier 2c pivote selon un axe de pivotement latéral 10 d'un angle compris entre 160 et 220 degrés (de préférence entre 170 et 200°C, de préférence encore d'environ 180°C) lorsque l'on fait passer le logement de la configuration panier à la configuration siège ou inversement.

Dans la configuration siège, la partie mobile du dossier 2c est située à l'arrière du logement 2 et au-dessus de la partie fixe du dossier 2b.

Dans la configuration panier, la partie mobile du dossier 2c est située à l'avant du logement 2, en face de la partie fixe du dossier 2b et au-dessus de l'assise 2a, de préférence sans espace intermédiaire entre l'assise 2a et la partie mobile du dossier 2c.

De préférence, en configuration panier, le dossier s'élève sur essentiellement la totalité de la périphérie de l'assise 2a, au-dessus de celle-ci. En configuration siège, le dossier s'élève sur une partie seulement de la périphérie de l'assise 2a, au-dessus de celle-ci, par exemple sur une partie arrière et éventuellement des parties latérales de cette périphérie.

La configuration siège et la configuration panier sont deux configurations stables, lors du passage d'une configuration à l'autre, la partie mobile du dossier 2c va passer par une série de configurations transitoires instables en cours de pivotement.

Dans des modes de réalisation, le logement 2 est entièrement formé par une ou plusieurs parois solides.

L'assise 2a et la partie fixe du dossier 2b peuvent notamment, comme illustré sur le premier mode de réalisation, constituer une unique paroi courbe, de type coque, définissant un espace creux. Dans ce cas, l'assise 2a est définie comme la portion de cette surface continue dont l'inclinaison par rapport à l'horizontale est inférieure à 10 degrés ; la partie fixe du dossier 2b est définie comme la portion de cette surface continue dont l'inclinaison par rapport à l'horizontale est supérieure à 10 degrés. Cette paroi courbe peut avoir en particulier la forme d'une portion de sphère, ou d'une portion d'ovoïde, ou d'une portion d'ellipsoïde, ou toute autre forme apparentée.

Dans des modes de réalisation, l'axe de pivotement 10 de la partie mobile du dossier 2c est situé à l'extrémité haute et avant de la partie fixe du dossier 2b.

Le pivotement de la partie mobile du dossier 2c peut être assuré au moyen d'un dispositif de tiges insérées dans des trous. Les tiges peuvent être fixées ou intégrées à la structure de cadre et interagir avec des trous dans la partie mobile du dossier 2c, ou inversement. Alternativement, le pivotement peut être assuré par des charnières entre la partie mobile du dossier 2c et la partie fixe du dossier 2b ou la structure de cadre.

Dans des modes de réalisation, la structure de cadre comprend deux montants 3, le logement 2 étant disposé entre les deux montants 3, le pivotement de la partie mobile du dossier 2c est effectuée au moyen de deux tiges alignées solidaires de la partie mobile du dossier 2c et situées de part et d'autre de celle-ci. Chacune de ces tiges en vis-à-vis s'insère dans un trou respectif présent dans la structure de cadre, par exemple présent dans un montant 3 respectif de la structure de cadre. Ce dispositif permet à la partie mobile du dossier 2c de pivoter selon l'axe de pivotement 10 aligné avec les tiges.

Dans des modes de réalisation, la structure de cadre comprend deux montants 3, le logement 2 étant disposé entre les deux montants 3, le pivotement de la partie mobile du dossier 2c est effectué au moyen de deux tiges alignées solidaires du cadre et situées de part et d'autre de la partie mobile du dossier 2c. Ces tiges peuvent de préférence être présentes sur les montants 3 respectifs. Chacune de ces tiges en vis-à-vis s'insère dans un trou présent dans la partie mobile du dossier 2c. Ce dispositif permet à la partie mobile du dossier 2c de pivoter selon l'axe de pivotement 10 aligné avec les tiges.

Dans des modes de réalisation, le pivotement de la partie mobile du dossier 2c est réalisé au moyen de deux charnières alignées situées de part et d'autre de la partie mobile du dossier 2c. Ces charnières sont solidaires à la fois de la partie mobile du dossier et des montants 3 ou de la partie fixe du dossier 2b. Ce dispositif permet à la partie mobile du dossier 2c de pivoter selon l'axe de pivotement 10 aligné avec les charnières.

Le chariot 1 peut également comprendre une tablette supérieure 9, qui peut notamment être fixée entre les montants 3, au-dessus du logement 2. La tablette 9 est de préférence essentiellement horizontale mais peut être alternativement inclinée. Elle peut être par exemple configurée pour recevoir des objets tels qu'un téléphone mobile, des clés, un sac à main, un portefeuille, un gobelet ou autre. La tablette 9 peut présenter une surface disponible inférieure à celle du plateau inférieur 6.

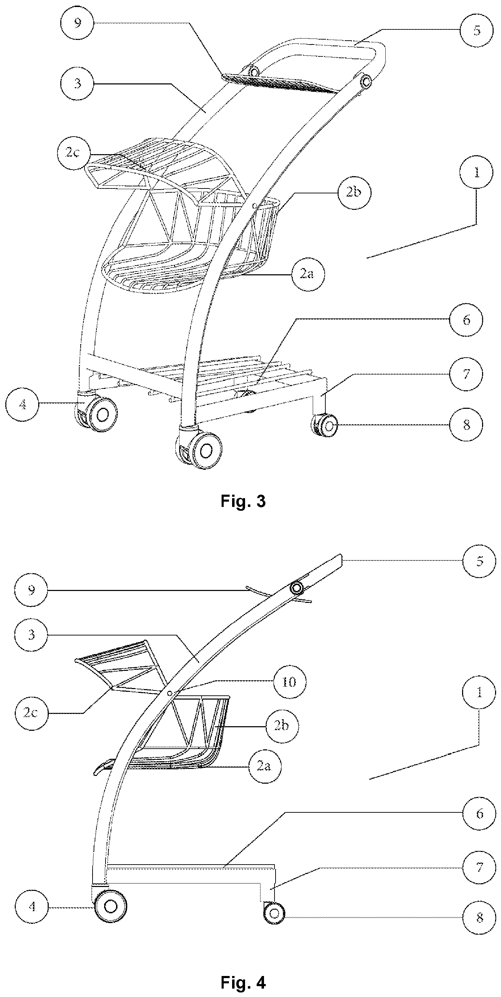

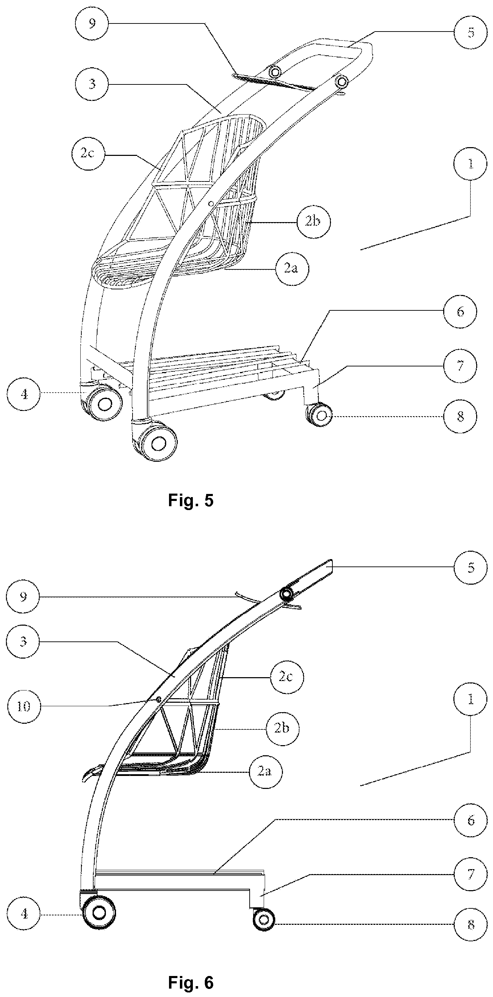

Selon le premier mode de réalisation, le logement 2 peut être dans la configuration panier illustrée sur les **figures 1** et **2****.** Dans cette configuration panier, la partie mobile du dossier 2c peut ensuite subir un mouvement global de pivotement vers l'avant (selon l'axe latéral 10), avec comme résultat le passage à la configuration siège illustrée sur les **figures 5** et **6****.** Au cours de ce mouvement de pivotement, la partie mobile du dossier 2c passe par une série de configurations transitoires instables comme illustré sur les **figures 3** et **4****.**

Dans la configuration siège, le chariot 1 peut être emboité avec un ou plusieurs chariots identiques afin de les stocker de manière compacte.

Dans le premier mode de réalisation, le logement 2 tel qu'illustré peut être réalisé avec des fils métalliques soudés entre eux. L'assise 2a comporte des portions horizontales suivant l'axe avant arrière. Le dessin des fils métalliques dans le plan de l'assise 2a permet d'emboîter efficacement les logements 2 de chariots 1 adjacents pour les stocker.

En particulier le plateau inférieur 6 d'un chariot avant peut être inséré entre les montants 3 d'un chariot arrière, grâce au dessin en plan des fils métalliques qui le constitue, comme illustré, ou encore grâce à l'inclinaison du plateau inférieur 6. Le logement 2 peut avoir une forme telle que le logement 2 du chariot arrière s'emboite au moins partiellement avec le logement 2 du chariot avant, dans la configuration stockage. La distance entre deux chariots emboités successifs (point à point) peut ainsi être, de préférence, inférieure ou égale à 300 mm, de préférence inférieure ou égale à 200 mm, de préférence encore inférieure ou égale à 140 mm.

On décrit à présent un deuxième mode de réalisation du chariot 1, en référence aux **figures 7**à **12**. Ce chariot 1 présente une structure similaire à celle du premier mode de réalisation, et peut présenter les mêmes caractéristiques optionnelles. En particulier, le logement 2 tel qu'illustré est constitué de plusieurs parois pleines.

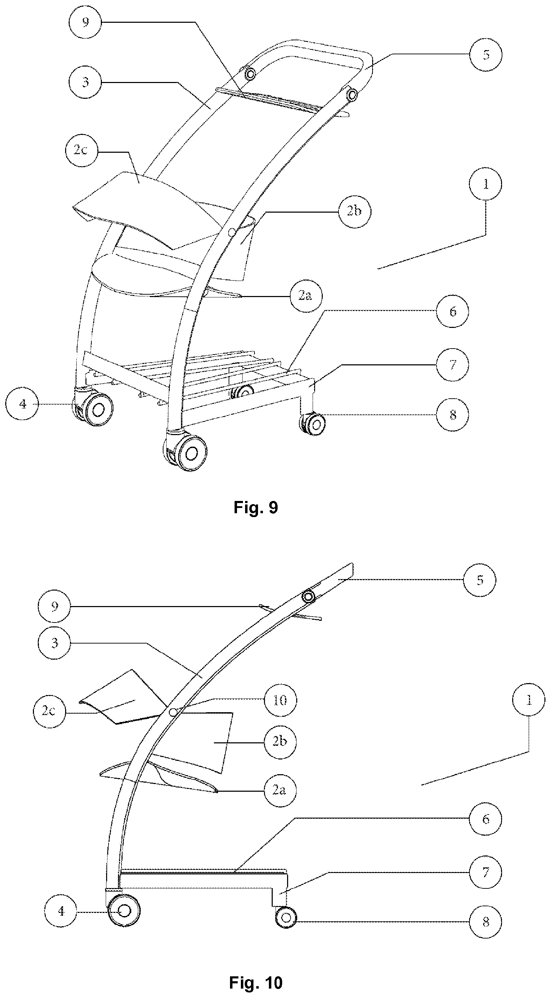

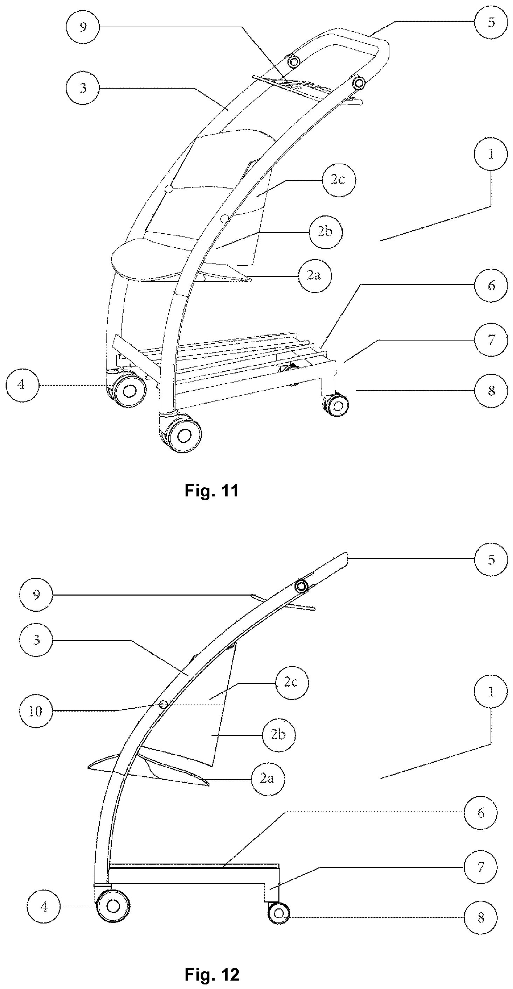

Selon ce second mode de réalisation, le logement 2 peut être dans la configuration panier illustrée sur les **figures 7** et **8****.** La partie mobile du dossier 2c peut ensuite subir un mouvement global de pivotement vers l'avant (selon un axe latéral 10), avec comme résultat le passage à la configuration siège illustrée sur les **figures 11** et **12****.** Au cours de ce mouvement de pivotement, la partie mobile du dossier 2c passe par une série de configurations transitoires instables comme illustré sur les **figures 9** et **10****.**

Dans le second mode de réalisation, le logement 2 tel qu'illustré peut être réalisé avec des parois pleines de préférence en bois, en métal ou en plastique. L'assise 2a présente de préférence une orientation inclinée vers l'arrière (c'est-à-dire que l'altitude de l'assise 2a est supérieure à son extrémité avant par rapport à son extrémité arrière). L'assise 2a peut aussi présenter une orientation inclinée vers l'avant (c'est-à-dire que l'altitude de l'assise 2a est inférieure à son extrémité avant par rapport à son extrémité arrière). De plus, un espace (par exemple une fente) est prévu entre l'assise 2a et la partie fixe du dossier 2b, afin de permettre l'insertion dans celle-ci de l'assise 2a d'un autre chariot. Ainsi, il est possible d'emboîter efficacement les logements 2 de chariots 1 adjacents pour les stocker, grâce à l'inclinaison de l'assise 2a.

Dans la configuration siège, le chariot 1 peut être emboité avec un ou plusieurs chariots identiques afin de les stocker de manière compacte du fait de l'inclinaison de l'assise 2a.

Quel que soit le mode de réalisation, le chariot 1 peut également comprendre un ou plusieurs crochets (non illustrés sur les figures) adaptés pour suspendre des objets tels que par exemple un sac à main, un manteau ou autre. Ces crochets peuvent être prévus sur la structure de cadre, et par exemple sur un ou les montant(s) 3 ou sur la tablette 9.

De plus, quel que soit le mode de réalisation, le chariot 1 peut comprendre un dispositif de freinage (non illustré sur les figures) configuré pour freiner le déplacement du chariot 1. Le chariot 1 peut également comprendre un dispositif de blocage (non illustré), configuré pour bloquer totalement ou partiellement les roues 4, 8. Le dispositif de freinage et/ou le dispositif de blocage peuvent par exemple être activés par un élément d'activation situé dans la poignée 5. Alternativement, le dispositif de freinage et/ou le dispositif de blocage peuvent être actifs par défaut et être désactivés par un élément de désactivation par exemple situé dans la poignée 5, notamment lorsque le chariot 1 est poussé. Il est particulièrement avantageux de pouvoir bloquer les roues 4, 8 lorsque le chariot 1 est en configuration siège afin d'éviter le déplacement du chariot 1 lorsqu'une personne est assise sur celui-ci.

Quel que soit le mode de réalisation, le chariot 1 peut comprendre un ou plusieurs éléments (non illustrés) configurés pour maintenir une personne dans le logement 2 lorsque le chariot 1 est dans la configuration siège. Ces éléments peuvent notamment comprendre une ceinture de sécurité.

Quel que soit le mode de réalisation, le chariot 1 peut comprendre un ou plusieurs éléments (non illustrés) configurés pour permettre à la personne assise de reposer ses pieds lorsque le chariot 1 est dans la configuration siège.

Quel que soit le mode de réalisation, le chariot 1 peut comprendre un système de verrouillage du logement dans la configuration siège et/ou de verrouillage du logement dans la configuration panier.

Le chariot 1 selon l'invention peut avoir des dimensions maximales de 450 à 1000 mm de longueur (selon la direction avant-arrière), de 400 à 700 mm de largeur et de 800 à 1200 mm de hauteur, et de préférence de 700 mm à 900 mm de longueur, de 500 à 600 mm de largeur et de 1050 à 1150 mm de hauteur.

Le logement 2 du chariot 1 de l'invention peut notamment présenter une dimension maximale en longueur (direction avant-arrière) dans la configuration panier de 400 à 800 mm, de préférence de 500 à 700 mm, et encore de préférence de 550 à 650 mm.

Le logement 2 du chariot 1 de l'invention peut notamment présenter une dimension maximale en largeur (direction latérale) dans la configuration panier de 300 à 700 mm ; de préférence de 350 à 600 mm ; et encore de préférence de 400 à 500 mm.

Le chariot 1 selon l'invention peut être pourvu d'un système électronique comprenant par exemple une puce, un émetteur, un récepteur, optionnellement une batterie, un ou des capteurs de position, de pression... Avantageusement, le système électronique est susceptible de communiquer par une connexion sans fil avec un élément externe par exemple un ordinateur, un serveur, une tablette ou un téléphone portable. La connexion sans fil peut par exemple être choisie parmi une connexion radiofréquence, une connexion Bluetooth et une connexion Wifi.

Ce système électronique peut permettre par exemple de localiser le chariot 1 afin de permettre la surveillance et la gestion des différents chariots dans l'espace où ils sont utilisés. En outre, ce système électronique peut notamment permettre la collecte d'informations concernant l'utilisation du chariot 1. Telles informations peuvent comprendre par exemple les horaires et durées de séjour du chariot 1 dans un ou plusieurs périmètres géographiques donnés, la vitesse éventuelle de déplacement du chariot 1, la configuration panier ou siège du chariot, la présence éventuelle d'un objet ou d'une personne dans le logement 2 du chariot, etc.

Le chariot 1 selon l'invention peut être avantageusement utilisé dans une aérogare ou dans une gare de train ou dans un centre commercial.

Le chariot 1 selon l'invention peut également être utilisé dans tout espace commercial ou urbain qui nécessite l'utilisation d'un chariot qui peut adopter une configuration de siège et une configuration de panier selon les besoins.

## Revendications

1. Chariot (1) présentant une direction avant-arrière dans un plan horizontal , le chariot (1) comprenant :
- une structure de cadre (3, 6, 7) comprenant deux montants (3);
- une pluralité de roues (4, 8) fixées à une partie inférieure de la structure de cadre et destinées à être en contact avec le sol;
- une poignée (5) disposée à une extrémité arrière du chariot (1) et configurée pour déplacer manuellement le chariot (1) ;
- un logement (2) disposé entre les deux montants (3) et fixé à ceux-ci; ledit logement (2) est conçu pour passer d'une configuration panier à une configuration siège et inversement en restant solidaire de ladite structure de cadre (3, 6, 7) ; et en ce que le logement (2) comporte :
- une assise (2a) comprenant une surface dont l'inclinaison par rapport à l'horizontale est inférieure à 10 degrés et située en dessous d'un dossier ;
- le dossier (2b, 2c) comprenant une ou des surfaces dont l'inclinaison par rapport à l'horizontale est supérieure à 10 degrés et situées au-dessus de l'assise ;
**caractérisé en ce que**
le dossier du logement (2) est constitué de :
- une partie fixe du dossier (2b) située à l'arrière de l'assise (2a) et
- une partie mobile du dossier (2c) ;
ladite assise (2a) et la partie fixe du dossier (2b) étant maintenus sans mouvement possible vis-à-vis de ladite structure de cadre. (3, 6, 7),
et dans lequel la partie mobile du dossier (2c) pivote par rapport à ladite partie fixe du dossier (2b) autour d'un axe de pivotement (10) qui est orthogonale à ladite direction avant-arrière dans ledit plan horizontal, d'un angle compris entre 160 et 220 degrés lorsque l'on fait passer le logement de la configuration panier à la configuration siège ou inversement.

2. Chariot (1) selon la revendication 1 , dans lequel le logement (2) est entièrement formé par une ou plusieurs parois solides.

3. Chariot (1) selon l'une des revendications 1 ou 2, dans lequel, en configuration siège, la partie mobile du dossier (2c) est située à l'arrière du logement (2) et au-dessus de la partie fixe du dossier (2b) et dans lequel, en configuration panier, la partie mobile du dossier (2c) est située à l'avant du logement (2), en face de la partie fixe du dossier (2b) et immédiatement au-dessus de l'assise (2a).

4. Chariot (1) selon l'une des revendications 1 à 3, dans lequel l'axe de pivotement (10) de la partie mobile du dossier (2c) est situé à l'extrémité haute et avant de la partie fixe du dossier (2b).

5. Chariot (1) selon l'une des revendications 1 à 4, le pivotement (10) de la partie mobile du dossier (2c) est réalisé au moyen de deux tiges alignées solidaires de la partie mobile du dossier (2c) et situées de part et d'autre de celle-ci ; et dans lequel chacune des tiges en vis-à-vis s'insère dans un trou présent dans un montant (3) de la structure du cadre ; la partie mobile du dossier (2c) étant configurée pour pivoter sur l'axe de pivotement (10) aligné avec les tiges.

6. Chariot (1) selon l'une des revendications 1 à 4, dans lequel le pivotement de la partie mobile du dossier (2c) est réalisé au moyen de deux tiges alignées solidaires du cadre et situées de part et d'autre de la partie mobile du dossier (2c) ; et dans lequel chacune des tiges en vis-à-vis s'insère dans un trou présent dans la partie mobile du dossier (2c) ; la partie mobile du dossier (2c) étant configurée pour pivoter sur un l'axe de pivotement (10) aligné avec les tiges.

7. Chariot (1) selon l'une des revendications 1 à 4, dans lequel le pivotement de la partie mobile du dossier (2c) est réalisé au moyen de deux charnières alignées situées de part et d'autre de la partie mobile du dossier (2c), ces charnières étant solidaires à la fois de la partie mobile du dossier et des montants (3) ou de la partie fixe du dossier (2b) ; la partie mobile du dossier étant configurée pour pivoter sur l'axe de pivotement (10) aligné avec les charnières.

8. Chariot (1) selon l'une des revendications 1 à 7, dans lequel la partie fixe du dossier (2b) et l'assise (2a) sont en continuité, sans espace intermédiaire.

9. Chariot (1) selon l'une des revendications 1 à 7, comprenant une fente entre la partie fixe du dossier (2b) et l'assise (2a).

10. Chariot (1) selon l'une des revendications 1 à 9, susceptible de s'emboîter avec un même chariot (1) selon ladite direction avant-arrière, les chariots (1) étant de préférence en configuration siège.

## Patentansprüche

1. Handwagen (1) mit einer Vorwärts-/Rückwärtsrichtung in einer horizontalen Ebene, wobei der Handwagen (1) aufweist:
- eine Rahmenstruktur (3, 6, 7) mit zwei Streben (3);
- mehrere Räder (4, 8), die an einem unteren Teil der Rahmenstruktur befestigt sind und für den Kontakt mit dem Boden vorgesehen sind;
- einen Griff (5), der an einem hinteren Ende des Handwagens (1) angeordnet ist und zum manuellen Bewegen des Handwagens (1) ausgebildet ist;
- eine Aufnahme (2), die zwischen den beiden Streben (3) angeordnet ist und an diesen befestigt ist;
wobei die Aufnahme (2) dazu ausgebildet ist, von einer Korb-Konfiguration in eine Sitz-Konfiguration überführt zu werden, und umgekehrt, wobei sie mit der Rahmenstruktur (3, 6, 7) fest verbunden bleibt; und wobei die Aufnahme (2) aufweist:
- eine Sitzfläche (2a) mit einer Fläche, deren Neigung in Bezug auf die Horizontale geringer als 10 Grad ist und die unterhalb einer Rückenlehne angeordnet ist;
- wobei die Rückenlehne (2b, 2c) eine Fläche oder Flächen aufweist, deren Neigung in Bezug auf die Horizontale größer als 10 Grad ist und oberhalb der Sitzfläche angeordnet ist/sind;
**dadurch gekennzeichnet, dass** die Rückenlehne der Aufnahme (2) gebildet ist durch
- einen festen Rückenlehnenteil (2b), der auf der Rückseite der Sitzfläche (2a) angeordnet ist, und
- einen bewegbaren Rückenlehnenteil (2c);
wobei die Sitzfläche (2a) und der feste Rückenlehnenteil (2b) ohne die Möglichkeit einer Bewegung in Bezug auf die Rahmenstruktur (3, 6, 7) gehalten sind,
und wobei der bewegbare Rückenlehnenteil (2c) in Bezug auf den festen Rückenlehnenteil (2b) um eine zu der Vorwärts-/Rückwärtsrichtung in der horizontalen Ebene orthogonalen Schwenkachse (10) um einen Winkel zwischen 160 und 220 Grad schwenkt, wenn die Aufnahme von der Korb-Konfiguration in die Sitz-Konfiguration, oder umgekehrt, überführt wird.

2. Handwagen (1) nach Anspruch 1, bei welchem die Aufnahme (2) vollständig durch eine oder mehrere feste Wände gebildet ist.

3. Handwagen (1) nach Anspruch 1 oder 2, bei welchem der bewegbare Rückenlehnenteil (2c) in der Sitz-Konfiguration auf der Rückseite der Aufnahme (2) und über dem festen Rückenlehnenteil (2b) angeordnet ist, und bei welchem der bewegbare Rückenlehnenteil (2c) in der Korb-Konfiguration auf der Vorderseite der Aufnahme (2) gegenüber dem festen Rückenlehnenteil (2b) und unmittelbar über der Sitzfläche (2a) angeordnet ist.

4. Handwagen (1) nach einem der Ansprüche 1 bis 3, bei welchem die Schwenkachse (10) des bewegbaren Rückenlehnenteils (2c) am oberen und vorderen Ende des festen Rückenlehnenteils (2b) angeordnet ist.

5. Handwagen (1) nach einem der Ansprüche 1 bis 4, bei welchem das Schwenken (10) des bewegbaren Rückenlehnenteils (2c) durch zwei aufeinander ausgerichtete Stangen realisiert ist, welche fest mit dem bewegbaren Rückenlehnenteil (2c) verbunden sind und auf beiden Seiten desselben angeordnet sind; und bei welchem die gegenüberliegenden Stangen jeweils in ein Loch in einer Strebe (3) der Rahmenstruktur eingesetzt sind; wobei der bewegbare Rückenlehnenteil (2c) zum Schwenken um die mit den Stangen ausgerichtete Schwenkachse (10) ausgebildet ist.

6. Handwagen (1) nach einem der Ansprüche 1 bis 4, bei welchem das Schwenken des bewegbaren Rückenlehnenteils (2c) durch zwei aufeinander ausgerichtete Stangen realisiert ist, welche fest mit dem Rahmen verbunden sind und auf beiden Seiten des bewegbaren Rückenlehnenteils (2c) angeordnet sind; und bei welchem die gegenüberliegenden Stangen jeweils in ein Loch in dem bewegbaren Rückenlehnenteil (2c) eingesetzt sind; wobei der bewegbare Rückenlehnenteil (2c) zum Schwenken um die mit den Stangen ausgerichtete Schwenkachse (10) ausgebildet ist.

7. Handwagen (1) nach einem der Ansprüche 1 bis 4, bei welchem das Schwenken des bewegbaren Rückenlehnenteils (2c) durch zwei aufeinander ausgerichtete Scharniere realisiert ist, die auf beiden Seiten des bewegbaren Rückenteils (2c) angeordnet sind, wobei diese Scharniere gleichzeitig mit dem bewegbaren Rückenlehnenteil und den Streben (3) oder dem festen Rückenlehnenteil (2b) verbunden sind; wobei der bewegbare Rückenlehnenteil zum Schwenken um die mit den Scharnieren ausgerichtete Schwenkachse (10) ausgebildet ist.

8. Handwagen (1) nach einem der Ansprüche 1 bis 7, bei welchem der feste Rückenlehnenteil (2b) und die Sitzfläche (2a) ohne Zwischenraum durchgehend ausgebildet sind.

9. Handwagen (1) nach einem der Ansprüche 1 bis 7 mit einem Spalt zwischen dem festen Rückenlehnenteil (2b) und der Sitzfläche (2a).

10. Handwagen (1) nach einem der Ansprüche 1 bis 9, der geeignet ist, mit einem gleichen Handwagen (1) in Vorwärts-/Rückwärtsrichtung ineinander angeordnet zu werden, wobei sich die Handwagen (1) vorzugsweise in der Sitz-Konfiguration befinden.

## Claims

1. A trolley (1) having a fore-and-aft direction in a horizontal plane, the trolley (1) comprising :
- a frame structure (3, 6, 7) comprising two uprights (3);
- a plurality of wheels (4, 8) fixed to a lower part of the frame structure and intended to be in contact with the ground;
- a handle (5) disposed at a rear end of the trolley (1) and configured to move the trolley (1) manually;
- a housing (2) arranged between the two uprights (3) and fixed thereto,
said housing (2) is designed to change from a basket configuration to a seat configuration and vice versa while remaining integral with said frame structure (3, 6, 7); and in that the housing (2) comprises :
- a seat (2a) comprising a surface whose inclination to the horizontal is less than 10 degrees and located below a backrest ;
- the backrest (2b, 2c) comprising one or more surfaces whose inclination with respect to the horizontal is greater than 10 degrees and located above the seat;
**characterised in that** the backrest of the housing (2) consists of :
- a fixed backrest part (2b) located at the rear of the seat (2a) and
- a movable backrest part (2c);
the said seat (2a) and the fixed part of the backrest (2b) being held without any possible movement with respect to the said frame structure (3, 6, 7),
and wherein the movable part of the backrest (2c) pivots with respect to said fixed part of the backrest (2b) about a pivot axis (10) which is orthogonal to said front-rear direction in said horizontal plane, by an angle of between 160 and 220 degrees when the housing is moved from the basket configuration to the seat configuration or vice versa.

2. A trolley (1) according to claim 1, wherein the housing (2) is entirely formed by one or more solid walls.

3. A trolley (1) according to one of claims 1 or 2, wherein, in the seat configuration, the movable part of the backrest (2c) is located at the rear of the housing (2) and above the fixed part of the backrest (2b) and wherein, in the basket configuration, the movable part of the backrest (2c) is located at the front of the housing (2), opposite the fixed part of the backrest (2b) and immediately above the seat (2a).

4. A trolley (1) according to any one of claims 1 to 3, wherein the pivot axis (10) of the movable part of the backrest (2c) is located at the top and front end of the fixed part of the backrest (2b).

5. A trolley (1) according to any one of claims 1 to 4, the pivoting (10) of the movable part of the backrest (2c) is achieved by means of two aligned rods integral with the movable part of the backrest (2c) and located on either side thereof; and wherein each of the facing rods is inserted into a hole present in an upright (3) of the frame structure; the movable part of the backrest (2c) being configured to pivot on the pivoting axis (10) aligned with the rods.

6. Trolley (1) according to one of claims 1 to 4, in which the pivoting of the movable part of the backrest (2c) is achieved by means of two aligned rods integral with the frame and located on either side of the movable part of the backrest (2c); and in which each of the facing rods is inserted into a hole present in the movable part of the backrest (2c); the movable part of the backrest (2c) being configured to pivot on a pivoting axis (10) aligned with the rods.

7. Trolley (1) according to one of claims 1 to 4, in which the pivoting of the movable part of the backrest (2c) is achieved by means of two aligned hinges located on either side of the movable part of the backrest (2c), these hinges being integral both with the movable part of the backrest and with the uprights (3) or with the fixed part of the backrest (2b); the movable part of the backrest being configured to pivot on the pivoting axis (10) aligned with the hinges.

8. Trolley (1) according to one of claims 1 to 7, in which the fixed part of the backrest (2b) and the seat (2a) are continuous, with no intermediate space.

9. Trolley (1) according to one of claims 1 to 7, comprising a slot between the fixed part of the backrest (2b) and the seat (2a).

10. Trolley (1) according to one of claims 1 to 9, capable of nesting with the same trolley (1) in the said front-rear direction, the trolleys (1) preferably being in seat configuration.
